# EUROPÄISCHE PATENTANMELDUNG

(11) **EP 0 717 204 A1**
(43) Veröffentlichungstag der Anmeldung: **19.06.1996**
(21) Anmeldenummer: 95119572.6
(22) Anmeldetag: 12.12.1995
(51) Int. Cl.: F16B 21/12

(54) **Sicherheitsbolzen, der in Durchgangslöcher von Bauteilen bis zu einem Anschlag einschiebbar ist**

(30) Priorität: 12.12.1994 DE 4444154
(71) Anmelder: SAXONIA-FRANKE GMBH & CO., D-73037 Göppingen (DE)
(72) Erfinder: Ausprung, Erich, D-73312 Geislingen/Steige (DE)
(74) Vertreter: von Puttkamer, Nikolaus, Dipl.-Ing. Patentanwälte Haft, von Puttkamer Berngruber, Czybulka

(57) **Zusammenfassung**

Die Erfindung betrifft einen Sicherungsbolzen mit einem Schaftteil (1), einem Anschlagteil (2), an dem der Bolzen beim Einschieben in zueinander ausgerichtete Bohrungen von Bauteilen an einer Seite der Bauteile anschlägt, und mit einem federnden Sicherungsteil, das ein Sperrorgan (52, 62, 72, 82) aufweist, das dann, wenn das Anschlagteil (2) anschlägt, an der anderen Seite der Bauteile arretierend ausfedernd. Das Sicherungsteil (5, 6, 7, 8) weist einen durch eine Aussparung (4) des Schaftteiles (1) federnd nach außen ragenden und sich gegen den Innenumfang der Bohrungen der Bauteile legenden Bereich (51', 61', 71', 81') und das durch eine weitere Aussparung (3) über den Außenumfang des Schaftteiles (1) wenigstens dann, wenn das Anschlagteil (2) an den Bauteilen anschlägt, ausfedernde Sperrorgan (52, 62, 72, 82) auf.

## Beschreibung

Die Erfindung betrifft einen Sicherungsbolzen, der in Durchgangslöcher von Bauteilen bis zu einem Anschlag einschiebbar ist, nach dem Oberbegriff des Patentanspruches 1.

Aus der DE-OS 26 48 496 geht ein Sicherungsbolzen dieser Art hervor. Dieser bekannte Sicherungsbolzen ist mit einem Durchgang versehen, der die über die Außenflächen der Bauteile hervorstehenden Enden des Bolzens verbindet und in diesen Enden Öffnungen bildet. In den Durchgang ist ein federndes Sicherungsteil eingesteckt, das aus beiden genannten Öffnungen des Durchganges austritt und sich am führenden Ende hinter das betreffende Bauteil setzt. An seinem rückwärtigen Ende bildet das Sicherungsteil eine Klammer, die in eine Ausnehmung im Bolzen einrastet.

Ein Problem eines Sicherungsbolzens dieser Art besteht darin, daß er relativ schwer montierbar ist, weil zunächst der Sicherungsbolzen selbst in die Bohrungen der Bauteile eingeschoben werden muß und danach in einem separaten Montageschritt das federnde Sicherungsteil in den Durchgang des so montierten Bolzens eingeschoben werden muß, derart, daß sein führendes Ende in einen speziellen Durchgang eingefädelt wird und nach außen tritt. Das hintere Ende des Sicherungsteiles muß ferner am rückwärtigen Ende des Bolzens befestigt werden. Ein weiteres Problem des bekannten Sicherungsbolzens besteht darin, daß er nicht in der Lage ist, einen hundertprozentigen Spielausgleich zu bewirken.

Die Aufgabe der vorliegenden Erfindung besteht daher darin, einen Sicherungsbolzen der eingangs genannten Art dahingehend zu verbessern, daß er mit oder ohne einem Montagewerkzeug leicht montierbar ist und zudem für einen guten Spielausgleich sorgt.

Diese Aufgabe wird durch einen Sicherungsbolzen der eingangs genannten Art gelöst, der durch die in dem kennzeichnenden Teil des Patentanspruches 1 angegebenen Merkmale gekennzeichnet ist.

Der wesentliche Vorteil des erfindungsgemäßen Sicherungsbolzens besteht darin, daß er einen extrem guten Spielausgleich über das sich zusätzlich an den Innenwandungen der Bohrungen der Bauteile abstützende Sicherungsteil schafft. Damit ist eine verminderte Geräuschentwicklung verbunden. Vorteilhafterweise ist der erfindungsgemäße Sicherungsbolzen sehr einfach mit oder ohne Montagewerkzeug sowohl bei seiner Montage, wie auch bei seiner Demontage, handhabbar.

Vorteilhafterweise kann der erfindungsgemäße Sicherungsbolzen so ausgelegt werden, daß er extrem hohe Kräfte übertragen kann, wenn sein Schaftteil starke Blechdicken besitzt, und daß er wegen seines weich federnden Sicherungsteiles dennoch leicht montierbar und demontierbar ist. Zudem können durch die Dimensionierung des federnden Sicherungsteiles die für den Spielausgleich sorgenden Anpreßdrücke je nach Anwendungsfall dimensioniert werden.

Im folgenden werden die Ausgestaltungen der Erfindung im Zusammenhang mit den Figuren näher erläutert. Es zeigen:
- Fig. 1: den Längsschnitt eines erfindungsgemäßen Sicherungsbolzens;
- Fig. 2: einen Querschnitt des Sicherungsbolzens der Figur 1 und
- Fig. 3 und 6: Ausgestaltungen der Erfindung.

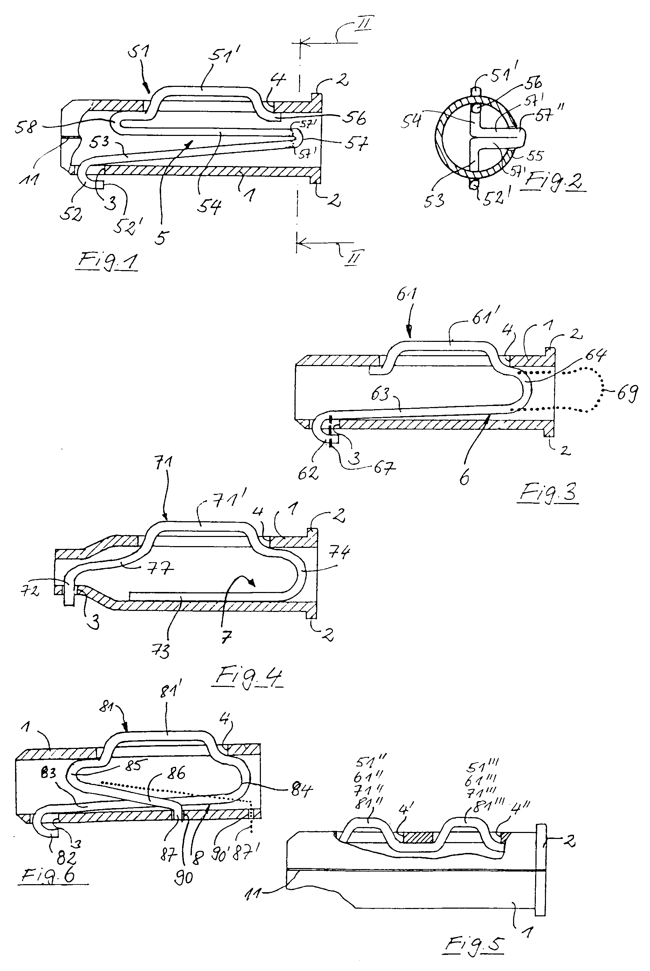

Gemäß Figur 1 besteht der vorliegende Sicherungsbolzen aus zwei getrennten Teilen, nämlich einem Schaftteil 1 und einem Sicherungsteil 5. Das Schaftteil 1 ist vorzugsweise aus einem rechteckigen Ausgangsmaterial in an sich bekannter Weise gerollt, wobei die Längskanten des Ausgangsmaterials sich entlang eines Längsspaltes 11 gegenüberliegen. Beim Einführen in die Durchgangsbohrungen von Bauelementen kann daher das Schaftteil 1 unter Zusammendrückung des Längsspaltes 11 federnd zusammengedrückt werden, so daß es federnd an den Innenwandungen der Durchgangsbohrungen der Bauteile anliegt. Es wird jedoch darauf hingewiesen, daß das Schaftteil 1 auch in anderer Weise, z.B. dadurch hergestellt werden kann, daß zwei über einen Bügel miteinander verbundene Halb- oder Teilschalen zur Schaftbildung aufeinanderzu gebogen werden. Eine solche Ausführungsform ist beispielsweise in der DE 33 47 503 C2 beschrieben. Das Schaftteil 1 kann auch ein massives Teil mit einer Innenbohrung sein.

An seiner einen Seite weist das Schaftteil 1 ein Anschlagteil 2 auf, das vorzugsweise durch Umbiegen eines Endbereiches oder eines Teiles dieses Endbereiches des genannten rechteckigen Ausgangsmaterials um 90° gebildet ist. Beim vollständigen Einführen des Schaftteiles 1 mit der dem Anschlagteil 2 abgewandten Seite voran in die genannten Durchgangsbohrungen liegt das Anschlagteil 2 an der einen Seite der Bauteile an, wobei es die Randbereiche der entsprechenden Durchgangsbohrung übergreift. Es wird darauf hingewiesen, daß das Anschlagteil 2 auch in anderer Weise ausgestaltet sein kann. Beispielsweise kann zu seiner Bildung ein aus der Mantelfläche durch einen Trennschnitt erzeugtes Zungenteil nach außen abgebogen werden.

Im Inneren des Schaftteiles 1 befindet sich das federnde Sicherungsteil 5, das die Form eines gebogenen, vorzugsweise draht- oder streifenförmigen Federteiles aufweist. Dabei ist das Sicherungsteil 5 derart in das Schaftteil 1 eingesetzt, daß es mit einem Teilbereich 51 federnd durch eine Aussparung 4 des Schaftteiles 1 nach außen ragt und andererseits mit einem ein Sperrorgan bildenden Bereich 52 an dem dem Anschlagteil 2 abgewandten Endbereich des Schaftteiles 1 durch eine Aussparung 3 federnd nach außen ragt.

Vorzugsweise befinden sich die Aussparungen 3 und 4 an sich radial gegenüberliegenden Seiten des Schaftteiles 1, wobei sich die Aussparung 3 an der dem Anschlagteil 2 abgewandten Seite des Schaftteiles 1 befindet und die Aussparung 4 zwischen der Seite des Anschlagteiles 2 und der Seite der Aussparung 3 angeordnet ist.

Besonders bevorzugt befindet sich die Aussparung 4 dann, wenn das Schaftteil 1 durch Rollen hergestellt ist, der Rollnaht 11 gegenüberliegend.

Gemäß Figur 1 ist das federnde Sicherungsteil 5 so ausgestaltet, daß ein bogenförmiger Endbereich 52 im Inneren des Schaftteiles 1 in einen ersten Teilbereich 53 übergeht, der zur Seite des Anschlagteiles 2 hinverläuft, an dieser Seite über einen bogenförmigen Teilbereich 57 in einen zweiten Teilbereich 54 übergeht, der von der Seite des Anschlagteiles 2 zur gegenüberliegenden Seite zurückverläuft und dort über einen bogenförmigen Teilbereich 58 abgebogen ist und in einen Teilbereich 51 übergeht, der zur Seite des Anschlagteiles 2 zurückverläuft und mit einem Teilbereich 51' durch die Aussparung 4 federnd nach außen tritt. An der dem Teilbereich 58 abgewandten Seite liegt ein Teil 56 des Teilbereiches 51 im Randbereich der Aussparung 4 an der Innenwandung des Schaftteiles 1 an. Durch den ausgehend von der Seite des Anschlagteiles 2 V-förmigen Verlauf der vorzugsweise geraden Teilbereiche 53 und 54, wobei das genannte V sich zur dem Anschlagteil 2 abgewandten Seite öffnet, wird die besondere Federwirkung des Sicherungsteiles 5 erreicht, durch die auch sichergestellt wird, daß der Endbereich 52 durch die Aussparung 3 teilweise federnd nach außen tritt. Der Endbereich 52 ist vorzugsweise halbkreisförmig gebogen und tritt mit einem Teil seiner Biegung durch die Aussparung 3 hindurch.

Beim Einführen des vorliegenden Sicherungsbolzens in zueinander ausgerichtete Durchgangsbohrungen von Bauteilen greift der Rand der Durchgangsbohrung, in die der Sicherungsbolzen zuerst eingeführt wird, zunächst an dem über die Aussparung nach außen ragenden bogenförmigen Endbereich 52 an, wobei bei einer axialen Druckausübung dieser Bereich federnd soweit nach innen gedrückt wird, bis das Schaftteil 1 in die genannte Durchgangsbohrung eingeschoben werden kann. Danach greift die dem Anschlagteil 2 abgewandte Seite des über die Aussparung 4 nach außen ragenden Teilbereiches 51 des Sicherungsteiles 5 am Rand der Durchgangsbohrung an, so daß bei einer weiteren Druckausübung der Teilbereich 51 soweit nach innen gedrückt wird, daß das gesamte Schaftteil 1 in die Durchgangsbohrungen der Bauteile eingeschoben werden kann, bis das Anschlagteil 2 an dem ihm zugewandten Bauteil anliegt. In diesem Zustand federt der das Sperrorgan bildende Endbereich 52 nach außen, so daß das freie Ende 52' des bogenförmigen Endbereiches 52 an dem Randbereich der Durchgangsbohrung des dem Anschlagteil 2 abgewandten Bauteiles anliegt. Die Bauteile werden also zwischen dem Ende 52' des Bereiches 52 und dem Anschlagteil 2 festgehalten. Außerdem wird durch den federnd nach außen tretenden Teilbereich 51' eine zusätzliche Abstützung an den Innenwandungen der Durchgangsbohrungen der Bauteile bewirkt, so daß ein zusätzlicher Spielausgleich erreicht wird. Je nach Anforderung kann dabei durch die Dimensionierung der Federkraft des Sicherungsteiles 5 der Anpreßdruck variiert werden.

Durch die gepunkteten Linien in Figur 1 ist angedeutet, daß gemäß Figur 2 im Teilbereich 57 die Enden 57' der Teilbereiche 53 und 54 so abgebogen sein können, daß sie radial nach außen verlaufen und durch eine Öffnung 55 des Schaftteiles 1 nach außen hindurchtreten und dort über eine Biegung 57'' miteinander verbunden sind. Durch diese radial nach außen über das Schaftteil 1 hinausragende Biegung 57'' wird erreicht, daß eine axiale Verschiebung des Sicherungsteiles 5 in Bezug auf das Schaftteil 1 insbesondere bei der Montage desselben vermieden wird.

Es wird darauf hingewiesen, daß das beschriebene federnde Sicherungsteil 5 auch beliebig andere Formen aufweisen kann, sofern lediglich sichergestellt ist, daß ein federnder Teilbereich desselben aus einer Aussparung 4 des Schaftteiles 1 federnd nach außen tritt.

In der Figur 3 ist eine Ausführungsform des vorliegenden Sicherungsbolzens dargestellt, bei dem das federnde Sicherungsteil 6 mit einem Endbereich 62 durch die Aussparung 3 des Schaftteiles 1 hindurchtritt, wobei sich im Inneren vorzugsweise ein geradliniger Teilbereich 63 an den Endbereich 62 anschließt, der zur Seite des Anschlagteiles 2 verläuft, dieser Teilbereich 63 über einen bogenförmigen Bereich 64 in einen Teilbereich 61 übergeht, der zu der dem Anschlagteil 2 abgewandten Seite des Schaftteiles 1 zurückverläuft und einen Teilbereich 61 aufweist, der teilweise durch die Aussparung 4 des Schaftteiles 1 nach außen tritt. Das freie Ende des Teilbereiches 61 stützt am Randbereich der Aussparung 4 ab.

Bei den Ausführungsformen der Figuren 1 und 3 kann der das Sperrorgan bildende Endbereich 52 bzw. 62 anstatt halbkreisförmig oder winkelig ausgebildet zu sein, wobei sich der gebildete Halbkreis oder Winkel zum Anschlagteil 2 hin öffnet, auch die Form einer Abwinkelung zum Teilbereich 53 bzw. 63 aufweisen, die durch die die Form einer Bohrung oder eines Schlitzes aufweisende Aussparung 3 federnd nach außen ragt (Linie 67). Dies gilt auch für den Endbereich 82 der später erläuterten Ausführungsform der Figur 6. Wie dies durch die punktierte Linie 69 dargestellt ist, kann der die Teilbereiche 63 und 65 verbindende bogenförmige Teilbereich 64 auch aus dem Inneren des Schaftteiles 1 nach außen geführt sein, so daß zur Montage und zur Demontage die an den bogenförmigen Teilbereich 69 angrenzenden Teilbereiche 63 und 65 federnd zusammengedrückt werden können.

Eine besonders vorteilhafte Ausführungsform geht aus der Figur 4 hervor, bei der das Sicherungsteil 7 so gestaltet ist, daß der das Absperrorgan bildende Endbereich 72 durch den durch die Aussparung 4 hindurchtretenden Bereich 71' automatisch bei dem Einwärtsdrücken des Bereiches 71' federnd so vorgespannt wird, daß er nach dem Einführen des Schaftteiles 1 in die Durchgangsbohrungen der Bauteile hinter der letzten Durchgangsbohrung des letzten Bauteiles automatisch nach außen federt. Dadurch wird erreicht, daß beim Einschieben des Sicherungsbolzens der federnde Endbereich 52 bzw. 62 der Ausführungsformen der Figuren 1 und 3 nicht betätigt zu werden braucht. Zudem wird eine besonders starke Ausfederkraft des Endbereiches 72 erreicht, weil dieser durch den auf den Bereich 71' ausgeübten Druck, und nicht nur durch die bloße Federkraft des Sicherungsteiles 7 nach außen gedrückt wird. Zudem kann der Bereich 72 sich senkrecht zur Längsachse des Schaftteiles 1 erstrecken, was zu einer besonders einfachen Ausführungsform und guten Haltekraft führt, weil er im normalen Zustand in die Öffnung 3 zurückgezogen ist und erst beim Einschieben des Schaftteiles 1 in die Durchgangsbohrungen nach außen gepreßt wird. Im wesentlichen entspricht das Sicherungsteil 7 dem im Zusammenhang mit der Figur 3 beschriebenen Sicherungsteil 6, wobei jedoch der Teilbereich 62 nicht vorgesehen ist und der in das Innere des Schaftteiles 1 zurückgeführte Bereich 77 des Teilbereiches 71 bogenförmig verlängert ist und in den sich senkrecht zur Längsachse des Schaftteiles 1 erstreckenden Endbereich 72 übergeht. Die Teilbereiche 73 und 74 entsprechen den Teilbereichen 63 und 64 der Figur 3.

Um den Endbereich 72 durch die die Form einer Bohrung oder eines Schlitzes aufweisenden Aussparung 3 radial führen zu können, weist der dem Anschlagteil 2 abgewandte Endbereich des Schaftteiles 1 vorzugsweise einen kleineren Durchmesser auf als der Restbereich des Schaftteiles. Auf diese Weise wird erreicht, daß im Entspannungszustand des Sicherungsteiles 7 das freie Ende des Endbereiches 72 nicht über den Umfang des Schaftteiles 1 hinausragt und dennoch im Bereich des verringerten Durchmessers gestützt und geführt wird.

In der Figur 8 ist eine weitere Ausführungsform der Erfindung dargestellt, bei der die Teilbereiche 82, 83, 84 und 81 entsprechend den Teilbereichen 52, 53, 54 und 51 der Figur 3 ausgebildet sind. An das dem gebogenen Teilbereich 84 abgewandte Ende des Teilbereiches 81 schließt sich ein weiterer gebogener Teilbereich 85 an, der in einen vorzugsweise geraden Teilbereich 86 überleitet, der zur Seite des Anschlagelementes 2 verläuft. Der freie Endbereich 87 des Teilbereiches 86 ist so abgewinkelt, daß er in eine Schaftöffnung 90 eingreift, vorzugsweise jedoch nicht über den Außenumfang des Schaftteiles 1 übersteht. Durch dieses Eingreifen wird sichergestellt, daß das Sicherungsteil 8 nicht in axialer Richtung im Schaftteil 1 verschoben wird.

Es ist auch denkbar, die Schaftöffnung 90 zu dem Sperrorgan bzw. dem Teilbereich 82 abgewandten Seite des Schaftteiles 1 zu verlagern, wie dies durch die punktierte Linie der Figur 6 angedeutet ist, und den Teilbereich 86 entsprechend zu verlängern, so daß der abgewinkelte Endbereich 87' durch die Schaftöffnung 90' hindurchverläuft und über den Außenumfang des Schaftteiles 1 vorzugsweise radial nach außen ragt, um das Sperrorgan zu bilden, das in diesem Falle nicht am Schaftteil 1 ausgebildet sein muß, so daß dessen Herstellung einfacher und billiger wird. Nach der Montage stützen sich dann die entsprechenden Bauteile zwischen dem Endbereich 87' und dem freien Ende des Teilbereiches 82 ab.

Es wird darauf hingewiesen, daß der Bereich 51, 61, 71 bzw. 81 und die entsprechende Aussparung 4 je nach Anwendungsfall etwa mittig zur Längserstreckung des Schaftteiles 1 angeordnet oder ausgehend von der Mitte zur einen oder anderen Seite verschoben sein kann. Es ist auch denkbar, daß gemäß Figur 5 zwei in der Längsrichtung des Schaftteiles 1 voneinander beabstandete Aussparungen 4' und 4'' vorgesehen sind, durch die entsprechende Unterbereiche 51'', 51''', 61'', 61''' bzw. 71'', 71''' bzw. 81'', 81''' federnd nach außen treten.

Vorzugsweise ist das Sicherungsteil 5, 6, 7, 8 jeweils so dimensioniert, daß es nach dem Einsetzen in das Schaftteil 1 auffedert und sich an den entsprechenden Randbereichen der Aussparung 4 mit den Übergängen zwischen dem Bereich 51', 61', 71', 81' und dem Teilbereich 5, 6, 7, 8 sowie gegenüberliegend mit dem Teilbereich 53, 63, 73, 83 am Innenumfang des Schaftteils 1 federnd abstützt.

Wie dies im Zusammenhang mit der Figur 3 erläutert wurde, können auch bei den Figuren 1, 4 und 6 die Teilbereiche 57, 74 bzw. 84 nach außen geführt sein, so daß zur Montage oder Demontage die Teilbereiche 53, 54 bzw. 73, 71 bzw. 83, 81 manuell zusammengedrückt werden können. Im Falle der Figur 6 kann zusätzlich auch die Biegung 85 nach außen geführt sein, so daß die Teilbereiche 81 und 86 manuell zusammengedrückt werden können.

Das Schaftteil 1 besteht, wie beschrieben, bevorzugt aus Stahl. Es kann jedoch auch aus einem Kunststoffmaterial hergestellt werden.

## Patentansprüche

1. Sicherungsbolzen mit einem Schaftteil (1), einem Anschlagteil (2), an dem der Bolzen beim Einschieben in zueinander ausgerichtete Bohrungen von Bauteilen an einer Seite der Bauteile anschlägt, und mit einem federnden Sicherungsteil, das ein Sperrorgan (52, 62, 72, 82) aufweist, das dann, wenn das Anschlagteil (2) anschlägt, an der anderen Seite der Bauteile arretierend ausfedernd, dadurch gekennzeichnet, daß das Sicherungsteil (5, 6, 7, 8) einen durch eine Aussparung (4) des Schaftteiles (1) federnd nach außen ragenden und sich gegen den Innenumfang der Bohrungen der Bauteile legenden Bereich (51', 61', 71', 81') und das durch eine weitere Aussparung (3) über den Außenumfang des Schaftteiles (1) wenigstens dann, wenn das Anschlagteil (2) an den Bauteilen anschlägt, ausfedernde Sperrorgan (52, 62, 72, 82) aufweist.

2. Sicherungsbolzen nach Anspruch 1, dadurch gekennzeichnet, daß das Anschlagteil (2) die Form eines an der einen Seite des Schaftteiles (1) über den Umfang desselben nach außen ragenden Elementes aufweist.

3. Sicherungsbolzen nach Anspruch 2, dadurch gekennzeichnet, daß das Anschlagteil (2) durch Umbiegen des Endbereiches des Schaftteiles (1) an der einen Seite nach außen gebildet ist.

4. Sicherungsbolzen nach einem der Ansprüche 1 bis 3, dadurch gekennzeichnet, daß das Sicherungsteil (5) die Form eines Federteiles mit einem ersten Teilbereich, der das durch die weitere Aussparung (3) des Schaftteiles (1) federnd nach außen ragende Sperrorgan (52) bildet, mit einem im Inneren des Schaftteiles (1) an den ersten Teilbereich anschließenden weiteren Teilbereich (53), der von der anderen Seite des Schaftteiles (1) in Richtung auf die eine Seite des Schaftteiles (1) verläuft und dort über einen gebogenen dritten Teilbereich (57) in einen vierten Teilbereich (54) übergeht, der von der einen Seite des Schaftteiles (1) in Richtung auf die andere Seite des Schaftteiles (1) verläuft und dort über einen gebogenen vierten Teilbereich (58) in einen fünften Teilbereich (51) übergeht, der von der anderen zur einen Seite des Schaftteiles (1) verläuft und mit dem Bereich (51') federnd durch die Aussparung (4) nach außen tritt.

5. Sicherungsbolzen nach Anspruch 4, dadurch gekennzeichnet, daß der dritte Teilbereich (57) zwei nebeneinander in radialer Richtung des Schaftteiles (1) verlaufende Abwinklungen (57') des zweiten Teilbereiches (53) und des dritten Teilbereiches (54) aufweist und daß die über eine Biegung (57'') miteinander verbundenen Abwinkelungen (57') durch eine Öffnung (55) des Schaftteiles (1) nach außen treten und über den Umfang des Schaftteils (1) hinausragen.

6. Sicherungsbolzen nach Anspruch 4 oder 5, dadurch gekennzeichnet, daß der zweite Teilbereich (53) und/oder der vierte Teilbereich (54) geradlinig verlaufen und zwischen sich ein sich zur anderen Seite öffnendes "V" bilden.

7. Sicherungsbolzen nach einem der Ansprüche 1 bis 3, dadurch gekennzeichnet, daß das Sicherungsteil (6) einen das Sperrorgan (62) bildenden ersten, federnd durch die weitere Aussparung (3) nach außen tretenden ersten Teilbereich (62), einen im Schaftinneren von der anderen Seite des Schaftteiles (1) in Richtung auf die eine Seite des Schaftteiles (1) verlaufenden zweiten Teilbereich (63), der über einen gebogenen dritten Teilbereich (64) in einen vierten Teilbereich (61') übergeht, der von der einen Seite des Schaftteiles (1) in Richtung auf die andere Seite des Schaftteiles (1) verläuft und den federnd durch die Aussparung (4) nach außen tretenden Bereich (61') aufweist.

8. Sicherungsbolzen nach Anspruch 7, dadurch gekennzeichnet, daß der zweite Teilbereich (63) geradlinig verläuft.

9. Sicherungsbolzen nach Anspruch 7 oder 8, dadurch gekennzeichnet, daß der dritte Teilbereich (69) durch die Öffnung der einen Seite des Schaftteiles (1) nach außen tritt, so daß der zweite Teilbereich (63) und der vierte Teilbereich (61) manuell federnd aufeinanderzugedrückt werden können.

10. Sicherungsbolzen nach einem der Ansprüche 1 bis 3, dadurch gekennzeichnet, daß das Sicherungsteil (8) einen ersten Teilbereich, der das federnd durch die weitere Aussparung (3) nach außen tretende Sperrorgan (82) bildet, einen daran angeformten, im Schaftinneren von der anderen Seite des Schaftteiles (1) in Richtung auf die eine Seite des Schaftteiles (1) verlaufenden zweiten Teilbereich (83), einen gebogenen Bereich (84), über den der zweite Teilbereich (83) in einen vierten Teilbereich (81) übergeht, der von der einen Seite des Schaftteiles (1) in Richtung auf die andere Seite des Schaftteiles (1) verläuft und den durch die Aussparung (4) federnd nach außen tretenden Bereich (81') aufweist, und daß an das den dritten Teilbereich (84) abgewandte Ende des vierten Teilbereiches (81) ein gebogener fünfter Teilbereich (85) angeformt ist, über den der vierte Teilbereich (81) in einen sechsten Teilbereich (86) übergeht, der von der anderen Seite des Schaftteiles (1) in Richtung auf die eine Seite des Schaftteiles (1) verläuft und dessen freier Endbereich so abgewinkelt ist, daß er in eine Schaftöffnung (90) eingreift.

11. Sicherungsbolzen nach Anspruch 10, dadurch gekennzeichnet, daß die Schaftöffnung (90') im Endbereich der einen Seite des Schaftteiles (1) angeordnet ist, und daß der Endbereich (87') durch die Schaftöffnung (90') geführt ist und federnd über den Außenumfang des Schaftteiles (1) hinausragt, um das Anschlagteil zu bilden.

12. Sicherungsbolzen nach Anspruch 10 oder 11, dadurch gekennzeichnet, daß der zweite Teilbereich (53, 63, 83) und/oder der sechste Teilbereich (54) geradlinig ausgebildet sind.

13. Sicherungsbolzen nach einem der Ansprüche 1 bis 3, dadurch gekennzeichnet, daß das Sicherungsteil (7) einen ersten Teilbereich (72) aufweist, der in die weitere Öffnung (3) des Schaftteiles (1) eingreift, daß der erste Teilbereich (72) im Schaftinneren über einen zweiten Teilbereich (77), der von der anderen zur einen Seite des Schaftteiles (1) verläuft, in einen dritten Teilbereich (71) übergeht, der von der anderen Seite zur einen Seite des Schaftteiles (1) verläuft und den durch die Aussparung (4) federnd nach außen ragenden Bereich (71') aufweist, und an einer dem zweiten Teilbereich (77) abgewandten Seite über einen gebogenen vierten Teilbereich (74) in einen fünften Teilbereich (73) übergeht, der von der einen Seite des Schaftteiles (1) in Richtung auf die andere Seite des Schaftteiles (2) verläuft.

14. Sicherungsbolzen nach Anspruch 13, dadurch gekennzeichnet, daß der fünfte Teilbereich (73) federnd an der den dritten Teilbereich (71) gegenüberliegenden Seite der Innenwandung des Schaftteiles (1) anliegt.

15. Sicherungsbolzen nach Anspruch 13 oder 14, dadurch gekennzeichnet, daß die weitere Aussparung (3) an der anderen Seite des Schaftteiles (1) in einem Bereich eines verkleinerten Durchmessers desselben angeordnet ist und daß der erste Teilbereich (72) durch die weitere Aussparung (3) nach außen hindurchgreift, derart, daß er zwischen dem Außenumfang des Bereiches mit dem verkleinerten Durchmesser des Schaftteiles (1) und der Verlängerung des Außenumfanges des Bereiches mit dem größeren Durchmesser des Schaftteiles (1) endet, so daß er beim Einschieben des Sicherungsbolzens in Bohrungen von Bauteilen so betätigt wird, daß er in eine Position vorgespannt wird, in der er federnd über den Außenumfang des Schaftteiles (1) hinausragt, wenn der Bereich (71') federnd in Richtung auf das Innere des Schaftteiles gedrückt wird.

16. Sicherungsbolzen nach Ansprüche 13 bis 15, dadurch gekennzeichnet, daß der erste Teilbereich (72) die Form einer geradlinigen Abwinkelung des zweiten Teilbereiches (77) und die weitere Aussparung (3) die Form einer Bohrung aufweisen.

17. Sicherungsbolzen nach einem der Ansprüche 1 bis 16, dadurch gekennzeichnet, daß der federnde Bereich in mehrere Unterbereiche (51'', 51''', 61''. 61''', 71'', 71''', 81'', 81''') unterteilt ist, die voneinander beabstandet sind und durch voneinander beabstandete Aussparungen (4', 4'') hindurchgreifen.

18. Sicherungsbolzen nach einem der Ansprüche 1 bis 17, dadurch gekennzeichnet, daß die Aussparung (4) etwa in der Mitte der Längserstreckung des Schaftteiles (1) angeordnet ist.

19. Sicherungsbolzen nach einem der Ansprüche 1 bis 18, dadurch gekennzeichnet, daß das Schaftteil (1) durch eine Rolloperation hergestellt ist.

20. Sicherungsbolzen nach Anspruch 19, dadurch gekennzeichnet, daß die Aussparung (4) der Rollnaht (11) des Schaftteiles (1) gegenüberliegt.

21. Sicherungsbolzen nach einem der Ansprüche 1 bis 20, dadurch gekennzeichnet, daß das Sicherungsteil (5) aus einem Draht oder streifenförmigem Federstahl gebogen ist.

22. Sicherungsbolzen nach einem der Ansprüche 1 bis 21, dadurch gekennzeichnet, daß die weitere Aussparung (3) und die Aussparung (4) bzw. die Aussparungen (4', 4'') an Seiten des Schaftteiles (1) angeordnet sind, die sich in Bezug auf die Längsachse des Schaftteiles (1) gegenüberliegen.

23. Sicherungsbolzen nach Anspruch 21 oder 22 in Verbindung mit einem der Ansprüche 1 bis 18, dadurch gekennzeichnet, daß das Schaftteil (1) aus einem Kunststoffmaterial besteht.
